# NEW EUROPEAN PATENT SPECIFICATION

(11) **EP 0 900 587 B2**
(45) Date of publication and mention of the opposition decision: **25.02.2009**
(45) Mention of the grant of the patent: 21.12.2005
(21) Application number: 98870188.4
(22) Date of filing: 02.09.1998
(51) Int. Cl.: B01D 71/02

(54) **Gas-separating dense ceramic membrane**
Gastrennungsmembrane aus dichter Keramik
Membrane de séparation de gaz en céramique dense

(30) Priority: 05.09.1997 BE 9700726
(43) Date of publication of application: 10.03.1999
(73) Proprietor: "VLAAMSE INSTELLING VOOR TECHNOLOGISCH ONDERZOEK", afgekort "V.I.T.O.", 2400 Mol (BE)
(72) Inventor: Adriansens, Walter, 2400 Mol (BE); Luyten, Jan, 3054 Vaalbeek (BE); Buekenhoudt, Anita, 2000 Antwerpen (BE); Cooymans, Jozef, 2400 Mol (BE); Leysen, Roger, 2400 Mol (BE)
(74) Representative: Van Malderen, Joëlle

(56) References cited:
- EP-A- 0 732 306
- EP-A- 0 766 995
- WO-A-94/23829
- WO-A-94/24065
- "Fabrication and Structural Characterization of a Tape Cast Bismuth Oxide-Based Solid Electrolyte", Oliver John Gross, thesis submitted to the Graduate Department of Metallurgy and Materials Science, University of Toronto, 1993
- Thin-Film, Mixed-Conductive Membranes for Oxygen separation", S. Balagopal et al, Annual Report (January-December 1993) for the Gas Research Institute, March 1994

## Description

### Field of the invention

The present invention is related to a new method for obtaining a dense ceramic membrane, the dense ceramic membrane obtained by said method and its use in the filtration and separation of gas mixtures like air.

### Description of the prior art

Ceramic membranes have already been used in general for some time for many filtration and separation applications. Their advantages are, in particular, their high mechanical strength, their chemical stability and good thermal properties.

Many types of ceramic membranes have already been developed, and examples of them are the membranes described in EP-A-0650759 and EP-A-0766995. These are in all cases porous asymmetric ceramic membranes.

Important parameters for the applications of a membrane are porosity, pore size, chemical stability, mechanical strength, wetting properties and cleaning capability.

Membranes may be self-supporting or form a unit with a carrier. The latter case usually relates to a porous ceramic carrier composed of, for example, aluminium oxide. A membrane may be encountered in many forms, depending on the desired application. Flat and tubular designs, in particular, are encountered. Ceramic membranes are usually multilayer systems built up by coating a porous carrier.

Dense gas-separating membranes have already been described. A review of possible materials, usually in small pellet form (for example, 1 cm diameter, 2 mm thickness), which have been tested on a laboratory scale, is given in the PhD thesis of R.H.E. Van Doorn entitled "Oxygen Separator with Mixed Conducting Perovskite Membranes; R.H.E. Van Doorn; PhD thesis, University of Twente 1996". Such a membrane has in fact been claimed in tubular form by Balachandran. This involves tubes composed of LaSrCoO_{3-α} and SiFeCo_{0.5}Oₓ materials (ref. U. Balanchandran, J.T. Dusek, S.M. Sweeney, R.B. Poepel, R.L. Mieville and P. Maiya, M.S. Kleefish, S. Pei, T.P. Kobylinski and C.A. Udovich, A.C. Bose; American Ceramic Society Bulletin Volume 74, No. 1, January 1995). Document WO 94/24065 discloses a method for preparing dense ceramic membranes, comprising mixing a ceramic ion-conducting powder with a solvent, a binder and a dispersant, converting the suspension into the desired form, removing the solvent, and thermally treating the obtained product to obtain a dense structure. The ceramic powder has a mean particle size of about 5 micrometers.

### Aim of the invention

The aim of the invention is to provide a novel method for producing a gas-separating dense ceramic membrane.

### Characteristic elements of the invention

The present invention is related to a new method for obtaining a gas-separating dense membrane. A "dense membrane" is hereunder understood as meaning that the gas flux through the membrane will be lower than approximately 10⁻¹¹ mol.m⁻².s⁻¹.Pa⁻¹ and the membrane according to the invention is mainly composed of a ceramic ion-conducting material. Said material may be a proton-conducting, oxygen-conducting or mixed-conducting oxides having a fluorite, fluorite-like, perovskite or perovskite-like structure, or a mixture thereof. The method according to the invention comprises advantageously the following steps :
- an organic dispersant is mixed with an organic solvent to form a mixture,
- a ceramic ion-conducting and/or mixed-conducting powder whose particle size distribution is such that the particle size is lower than 10 µm and, for at least 25% by volume, is less than 1 µm, is added to said mixture to form a suspension,
- an organic binder is added to said suspension,
- the suspension is converted into a desired form,
- the solvent is removed from said suspension by extraction with a non-solvent (a coagulating agent like water), and
- the product having the desired form obtained undergoes a thermal treatment to obtain a dense structure of the desired form which constitutes the gas-separating dense membrane according to the invention.

Advantageously, the amount of ceramic ion-conducting and/or mixed-conducting powder is greater than 15% by volume based upon the total volume of the suspension.

According to the invention, the ceramic powder contains one or more powders selected from the group consisting of proton-conducting, oxygen-conducting or mixed-conducting oxides having a fluorite, fluorite-like, perovskite or perovskite-like structure or a mixture thereof.

Preferably, the amount of organic dispersant is comprised between 0.1 and 5% by weight, based upon the total weight of the suspension. Polyvinylpyrrolidone (PVP) is a possible organic dispersant which may be used in the method according to the invention.

The organic solvent may contain one or more substances selected from the group consisting of N-methyl-2-pyrrolidone, dimethylformamide, dimethyl sulphoxide, methyl ethyl ketone, dimethylacetamide (DMAC), tetrahydrofuran (THF), acetone, chloroform and dioxane.

The organic binder may contain one or more polymers selected from the group consisting of polysulphones, poly(vinylidene fluorides) and polyacrylonitriles.

According to the invention, the ceramic ion-conducting powder/organic binder weight ratio is advantageously comprised between 1 and 99, and preferably between 4 and 20.

The desired form of the obtained product is a hollow fibre, and the thickness of its wall is preferably comprised between 200 and 50 µm.

According to a preferred embodiment, the conversion of the suspension to a hollow-fibre form comprises the following steps :
- the suspension is forced through the outermost concentric opening of a spinneret, while a first coagulating agent is forced through the innermost concentric opening,
- the fibre obtained is immersed in a coagulating bath which contains a second coagulating agent.

A spinneret is an extrusion head having two concentric extrusion outlets. During extrusion of a substance or mixture through the outermost concentric opening, a long hollow fibre could be formed. However, these fibres collapse when they are produced with inadequate strength. For this reason, the procedure is to build up an hydrostatic pressure on the inside of the hollow fibre being formed by forcing a liquid through the innermost concentric opening of the spinneret. In the case of a coagulable substance or mixture, the fibre can be strengthened on the inside by forcing a coagulating liquid through the innermost concentric opening, while the outside is coagulated under the influence of a coagulating liquid in a coagulating bath.

According to another preferred embodiment, the desired form of the obtained product is a flat form. The conversion to the desired form may comprise the following steps :
- the suspension is spread out on a carrier,
- the carrier with the suspension is immersed in a coagulating bath filled with a first coagulating agent.

Advantageously, the first and the second coagulating agents used in the method according to the invention contain one or more substances selected from the group consisting of water, alcohol, mixtures of water with organic solvents and/or organic additives.

In the present invention, the thermal treatment may comprise a calcination step and a sintering step.

The present invention is also related to the gas-separating dense ceramic membrane obtained by said method, and to the use of said membrane for the filtration or the separation of gas mixtures like air.

### Detailed description of the invention

### Example

### Fabrication of a gas-separating hollow fibre membrane

### a) Preparation of the ion-conducting ceramic powder (LaSrCoFeO₃-y)

The following materials are ground in a pulverizer for about 2 hours at setting 5 using a 500 ml Si₃N₄ ball-mill with fifty 15 mm grinding balls and 200 ml of acetone : 97.7 g of La₂O₃, 59.1 g of SrCO₃, 64.2 g of CoO₄ and 15.9 g of Fe₂O₃ (Merck). The ground product is poured out onto a sieve tray and dried in an extraction cabinet. After drying, the powder is sieved on a preferred 355 µm sieve. The powder is then heated in an oven containing an air atmosphere to 925 °C with a heating rate of 120 °C/h. After about 10 hours at 925 °C, the powder is cooled at a cooling rate of about 200°C/h. The powder is mixed for half an hour. In this way, a LaSrCoFeO₃-y powder is obtained.

### b) Preparation of the suspension

1.05 g of PVP are dissolved in 105 g of NMP in a Dissmax mixer. 236 g of the LaSrCOFeO₃ powder prepared under (a) are added stepwise to the solution and mixed at setting 10.

This mixture is granular and poorly dispersed.

26.2 g of polysulphone are added stepwise to the mixture, with mixing at setting 10. After the whole amount of polysulphone has been added, mixing is carried out for a further 30 minutes at setting 10. A homogeneous suspension is obtained.

### c) Forming into hollow fibres with the aid of spinning

The suspension is pumped through the outermost opening of a spinneret (∅ = 3.2 mm), while a mixture of 50% water and 50% NMP flows through the innermost opening (∅ = 1.2 mm) as a result of the hydrostatic pressure difference. The spinneret is situated 1 cm above the liquid level of the coagulating bath which is about 50 cm deep and is filled with water at about 50 °C. The hollow fibres formed in this way were removed from the coagulating bath after 2 minutes and placed in isopropanol.

### d) Thermal treatments

The hollow fibres are calcined in an oven with an air atmosphere. The temperature is increased to 600 °C at a heating rate of about 20 °C/min. This temperature is maintained for 1 hour. Cooling is then carried out to room temperature at a cooling rate of 300 °C/h.

This calcination step removes the residual organic binder (in this case, polysulphone).

Finally, the hollow fibres are sintered by heating them in an air atmosphere with a heating rate of 5 °C/min to 900 °C and then with a heating rate of rise of about 100 °C/h to 1225 °C. This temperature is kept constant for 24 hours, after which cooling was carried out to room temperature with a cooling rate of about 300 °C/h.

The hollow fibres obtained have a bending strength measured by the four-point method of 75.4 Mpa +/-26.5.

The hollow fibres obtained can be used to separate gas mixtures (such as, for example, air).

## Claims

1. Method for obtaining a gas-separating dense ceramic membrane, comprising the following steps :
- an organic dispersant is mixed with an organic solvent to form a mixture,
- a ceramic ion-conducting and/or mixed-conducting powder whose particle size distribution is such that the particle size is lower than 10 µm and, for at least 25% by volume, is less than 1 µm, is added to said mixture to form a suspension,
- an organic binder is added to said suspension,
- the suspension is converted into a desired form,
- the organic solvent is removed from said suspension by extraction with a non-solvent, and
- the product obtained and having the desired form undergoes a thermal treatment comprising a calcination and a sintering step to obtain a dense structure.

2. Method according to claim 1, **characterised in that** the amount of ceramic ion-conducting and/or mixed-conducting powder is greater than 15% by volume based upon the total volume of the suspension.

3. Method according to claim 1 or 2, **characterised in that** the ceramic ion-conducting and/or mixed-conducting powder is selected from the group consisting of a proton-conducting, oxygen-conducting and/or mixed-conducting oxide having a fluorite, fluorite-like, perovskite or perovskite-like structure or a mixture thereof.

4. Method according to any one of the preceding claims, **characterised in that** the amount of organic dispersant is comprised between 0.1 and 5% by weight based upon the amount of solution.

5. Method according to any one of the preceding claims, **characterised in that** the organic dispersant is Polyvinylpyrrolidone.

6. Method according to any one of the preceding claims, **characterised in that** the organic solvent contains one or more substances selected from the group consisting of N-methyl-2-pyrrolidone, dimethylformamide, dimethyl sulphoxide, methyl ethyl ketone, dimethylacetamide, tetrahydrofuran, acetone, chloroform and dioxane.

7. Method according to any one of the preceding claims, **characterised in that** the organic binder contains one or more polymers selected from the group consisting of polysulphones, poly(vinylidene fluorides) and polyacrylonitriles.

8. Method according to any one of the preceding claims, **characterised in that** the ceramic ion-conducting and/or mixed-conduction powder/organic binder weight ratio is comprised between 1 and 99, preferably between 4 and 20.

9. Method according to any one of the preceding claims, **characterised in that** the desired form is a hollow fibre.

10. Method according to claim 9, **characterised in that** the conversion of the suspension to the desired form comprises the following steps :
- the suspension is forced through the outermost concentric opening of a spinneret, while a first coagulating agent is forced through the innermost concentric opening, and
- the fibre obtained is immersed in a coagulating bath which contains a second coagulating agent.

11. Method according to Claim 9, **characterised in that** the thickness of the wall of the hollow fibres is comprised between 200 and 50 µm.

12. Method according to any one of the claims 1 to 8, **characterised in that** the desired form is a flat form.

13. Method according to claim 12, **characterised in that** the conversion of the suspension to the desired form comprises the following steps :
- the suspension is spread out on a carrier, and
- the carrier with the suspension is immersed in a coagulating bath filled with a first coagulating agent.

14. Method according to claim 10 or 13, **characterised in that** the first and the second coagulating agents contain one or more substances selected from the group consisting of water, alcohol, mixtures of water with organic solvents and/or organic dispersants.

## Patentansprüche

1. Verfahren zum Erhalten einer dichten keramischen Gastrennmembran, umfassend die folgenden Schritte:
- Ein organisches Dispergiermittel wird mit einem organischen Lösemittel vermischt, um ein Gemisch zu bilden,
- ein keramisches ionenleitendes und/oder gemischtleitendes Pulver, dessen Teilchengrößenverteilung so ist, dass die Teilchengröße weniger als 10 µm und für mindestens 25 Vol.% weniger als 1 µm beträgt, wird dem Gemisch zugegeben, um eine Suspension zu bilden,
- der Suspension wird ein organisches Bindemittel zugegeben,
- die Suspension wird in eine gewünschte Form umgewandelt,
- das organische Lösemittel wird aus der Suspension durch Extraktion mit einem Nicht-Lösemittel entfernt, und
- das Produkt, das erhalten wird und die gewünschte Form aufweist, wird einer thermischen Behandlung unterworfen, die einen Kalzinierungs- und einen Sinterschritt umfasst, um eine dichte Struktur zu erhalten.

2. Verfahren nach Anspruch 1, **dadurch gekennzeichnet, dass** die Menge an keramischem ionenleitendem und/oder gemischtleitendem Pulver, bezogen auf das Gesamtvolumen der Suspension, mehr als 15 Vol.% beträgt.

3. Verfahren nach Anspruch 1 oder 2, **dadurch gekennzeichnet, dass** das keramische ionenleitende und/oder gemischtleitende Pulver aus der Gruppe ausgewählt ist, die aus einem protonenleitenden, sauerstoffleitenden und/oder gemischtleitenden Oxid mit einer Fluorit-, fluoritartigen, Perowskit- oder perowskitartigen Strukur oder einem Gemisch daraus besteht.

4. Verfahren nach irgendeinem der vorhergehenden Ansprüche, **dadurch gekennzeichnet, dass** die Menge an organischem Dispergiermittel, bezogen auf die Menge der Lösung, zwischen 0,1 und 5 Gew.% beträgt.

5. Verfahren nach irgendeinem der vorhergehenden Ansprüche, **dadurch gekennzeichnet, dass** das organische Dispergiermittel Polyvinylpyrrolidon ist.

6. Verfahren nach irgendeinem der vorhergehenden Ansprüche, **dadurch gekennzeichnet, dass** das organische Lösemittel eine oder mehrere Substanzen enthält, die aus der Gruppe ausgewählt sind, die aus N-Methyl-2-pyrrolidon, Dimethylformamid, Dimethylsulfoxid, Methyl-ethyl-keton, Dimethylacetamid, Tetrahydrofuran, Aceton, Chloroform und Dioxan besteht.

7. Verfahren nach irgendeinem der vorhergehenden Ansprüche, **dadurch gekennzeichnet, dass** das organische Bindemittel ein oder mehrere Polymere enthält, die aus der Gruppe ausgewählt sind, die aus Polysulfonen, Polyvinylidenfluoriden und Polyacrylnitrilen besteht.

8. Verfahren nach irgendeinem der vorhergehenden Ansprüche, **dadurch gekennzeichnet, dass** das Gewichtsverhältnis von keramischem ionenleitendem und/oder gemischtleitendem Pulver zu organischem Bindemittel zwischen 1 und 99, vorzugsweise zwischen 4 und 20 beträgt.

9. Verfahren nach irgendeinem der vorhergehenden Ansprüche, **dadurch gekennzeichnet, dass** die gewünschte Form eine Hohlfaser ist.

10. Verfahren nach Anspruch 9, **dadurch gekennzeichnet, dass** die Umwandlung der Suspension in die gewünschte Form die folgenden Schritte umfasst:
- die Suspension wird durch die äußerste konzentrische Öffnung einer Spinndüse gedrückt, während ein erstes Koagulationsmittel durch die innerste konzentrische Öffnung gedrückt wird, und
- die erhaltene Faser wird in ein Koagulationsbad getaucht, das ein zweites Koagulationsmittel enthält.

11. Verfahren nach Anspruch 9, **dadurch gekennzeichnet, dass** die Wandstärke der Hohlfasern zwischen 200 und 50 µm beträgt.

12. Verfahren nach irgendeinem der Ansprüche 1 bis 8, **dadurch gekennzeichnet, dass** die gewünschte Form eine flache Form ist.

13. Verfahren nach Anspruch 12, **dadurch gekennzeichnet, dass** die Umwandlung der Suspension in die gewünschte Form die folgenden Schritte umfasst:
- die Suspension wird auf einem Träger ausgebreitet, und
- der Träger mit der Suspension wird in ein Koagulationsbad getaucht, das mit einem ersten Koagulationsmittel gefüllt ist.

14. Verfahren nach Anspruch 10 oder 13, **dadurch gekennzeichnet, dass** das erste und das zweite Koagulationsmittel eine oder mehrere Substanzen enthalten, die aus der Gruppe ausgewählt sind, die aus Wasser, Alkohol, Gemischen von Wasser mit organischen Lösemitteln und/oder organischen Dispergiermitteln besteht.

## Revendications

1. Procédé pour obtenir une membrane céramique dense séparant des gaz, comprenant les étapes suivantes :
- un dispersant organique est mélangé avec un solvant organique pour former un mélange,
- une poudre de céramique conductrice d'ions et/ou conductrice mixte, dont la distribution granulométrique des particules est telle que la taille des particules est inférieure à 10 µm et, pour au moins 25% par volume, est inférieure à 1 µm, est ajoutée audit mélange pour former une suspension,
- un liant organique est ajouté à ladite suspension,
- la suspension est transformée dans la forme voulue,
- le solvant organique est retiré de ladite suspension par extraction à l'aide d'un non solvant, et
- le produit obtenu et ayant la forme voulue subit un traitement thermique comprenant une étape de calcination et de frittage pour obtenir une structure dense.

2. Procédé selon la revendication 1, **caractérisé en ce que** la quantité de poudre de céramique conductrice d'ions et/ou conductrice mixte est supérieure à 15% par volume par rapport au volume total de la suspension.

3. Procédé selon la revendication 1 ou 2,
**caractérisé en ce que** la poudre de céramique conductrice d'ions et/ou conductrice mixte est choisie dans le groupe constitué d'un oxyde conducteur de protons, conducteur d'oxygène et/ou conducteur mixte ayant une structure de fluorine, de type fluorine, de pérovskite ou de type pérovskite ou un mélange de ceci.

4. Procédé selon l'une quelconque des revendications précédentes, **caractérisé en ce que** la quantité de dispersant organique est comprise entre 0,1 et 5% par poids par rapport à la quantité de solution.

5. Procédé selon l'une quelconque des revendications précédentes, **caractérisé en ce que** le dispersant organique est la polyvinylpyrrolidone.

6. Procédé selon l'une quelconque des revendications précédentes, **caractérisé en ce que** le solvant organique contient une ou plusieurs substances choisies dans le groupe constitué de N-méthyl-2-pyrrolidone, diméthylformamide, diméthylsulfoxide, méthyléthylcétone, diméthylacétamide, tétrahydrofurane, acétone, chloroforme et dioxanne.

7. Procédé selon l'une quelconque des revendications précédentes, **caractérisé en ce que** le liant organique contient un ou plusieurs polymères choisis dans le groupe constitué de polysulfones, polyfluorures de vinylidène et polyacrylonitriles.

8. Procédé selon l'une quelconque des revendications précédentes, **caractérisé en ce que** le rapport pondéral poudre de céramique conductrice d'ions et/ou conductrice mixte/liant organique est compris entre 1 et 99, de préférence entre 4 et 20.

9. Procédé selon l'une quelconque des revendications précédentes, **caractérisé en ce que** la forme voulue est une fibre creuse.

10. Procédé selon la revendication 9, **caractérisé en ce que** la conversion de la suspension en la forme voulue comprend les étapes suivantes :
- la suspension est poussée à travers l'ouverture concentrique la plus externe d'une filière, pendant qu'un premier agent coagulant est poussé à travers l'ouverture concentrique la plus interne, et
- la fibre obtenue est immergée dans un bain coagulant, qui contient un deuxième agent coagulant.

11. Procédé selon la revendication 9, **caractérisé en ce que** l'épaisseur de la paroi des fibres creuses est comprise entre 200 et 50 µm.

12. Procédé selon l'une quelconque des revendications 1 à 8, **caractérisé en ce que** la forme voulue est une forme plane.

13. Procédé selon la revendication 12, **caractérisé en ce que** la conversion de la suspension en la forme voulue comprend les étapes suivantes .
- la suspension est étendue sur un support, et
- le support avec la suspension est immergé dans un bain coagulant rempli avec un premier agent coagulant.

14. Procédé selon la revendication 10 ou 13, **caractérisé en ce que** le premier et le deuxième agents coagulants contiennent une ou plusieurs substances choisies dans le groupe constitué d'eau, d'alcool, de mélanges d'eau et de solvants organiques et/ou de dispersants organiques.
